# FASCICULE DE BREVET EUROPEEN

(11) **EP 1 703 041 B1**
(45) Date de publication et mention de la délivrance du brevet: **23.01.2008**
(21) Numéro de dépôt: 06290270.5
(22) Date de dépôt: 16.02.2006
(51) Int. Cl.: E04H 5/12, F28C 1/00, F28F 25/08

(54) **Corps d'échange thermique adapté à une tour de refroidissement tour de refroidissement et procédé d'assemblage associés**
Wärmeaustauschkörper für einen Kühlturm und Zusammenbauverfahren desselben
Heat exchange body for a cooling tower and assembling process thereof

(30) Priorité: 17.02.2005 FR 0501626
(43) Date de publication de la demande: 20.09.2006
(73) Titulaire: Jacir - Air Traitement, 77340 Pontault Combault (FR)
(72) Inventeur: Andre, Gabriel, 88150 Thaon-Les-Vosges (FR)
(74) Mandataire: Casalonga, Axel

(56) Documents cités:
- EP-A- 0 211 817
- WO-A-03/039722
- US-A- 3 751 017
- US-A- 4 269 794
- US-A1- 2004 155 370

## Description

La présente invention concerne un corps d'échange thermique adapté à une tour de refroidissement, une tour de refroidissement et un procédé d'assemblage associés.

Une tour de refroidissement dite « réfrigérant atmosphérique » permet d'évacuer efficacement et économiquement vers un milieu extérieur, une chaleur générée par des procédés industriels ou des installations de climatisation, en pulvérisant dans un flux d'air, le fluide ayant servi au refroidissement de ces installations. Le fluide généralement utilisé est l'eau. L'eau pulvérisée est projetée sur des surfaces d'échange thermique d'un corps d'échange situé à l'intérieur de la tour de refroidissement. L'air traverse ledit corps d'échange pour réaliser un échange thermique avec l'eau, et est rejeté dans l'atmosphère. L'eau ainsi refroidie est collectée dans un bassin et retourne vers le procédé industriel ou l'installation de climatisation à refroidir.

On connaît, à l'heure actuelle, des tours de refroidissement comprenant une enveloppe à parois verticales à l'intérieur de laquelle est monté un corps d'échange thermique comprenant une pluralité d'éléments d'échange thermique réalisés, par exemple, sous forme de feuilles plastiques thermoformées collées entre elles, et posées sur des supports fixés contre les parois latérales de l'enveloppe.

De par leur conception, de tels corps d'échange thermique nécessitent des opérations d'assemblage à l'intérieur de la tour de refroidissement particulièrement longues et difficiles. En effet, les éléments d'échange thermique sont fixés successivement à l'intérieur de la tour. En outre, lors de telles opérations ou encore lors d'opérations de maintenance ou de nettoyage, les opérateurs sont amenés à pénétrer à l'intérieur de la tour et à monter à des hauteurs relativement importantes, à l'aide d'échafaudages par exemple. Lors de telles interventions, il existe ainsi un risque de chute de l'opérateur dans le vide. A cet effet, différents dispositifs de sécurité peuvent être utilisés, tels que des harnais de sécurité, mais rendent toutefois ces interventions malaisées et coûteuses. De plus, il est impossible d'accéder à la totalité du corps d'échange pour procéder à son nettoyage, sans un démontage complet.

Un corps d'échange thermique correspondant au préambule de la revendication 1 est connu du document US 3,751,017.

Un but de la présente invention est donc de résoudre ces inconvénients en proposant un corps d'échange thermique particulièrement facile à assembler, permettant de réduire sensiblement les risques d'accident lors de son installation à l'intérieur d'une tour de refroidissement et pouvant être nettoyé aisément dans sa totalité.

A cet effet, le corps d'échange thermique pour tour de refroidissement comprend une pluralité d'éléments d'échange thermique formant surfaces d'échange, une poutraison de suspension, et des moyens de liaison reliant les éléments d'échange thermique et la poutraison de suspension. La poutraison est pourvue d'une surface d'appui destinée à venir en contact contre une surface complémentaire de la tour de manière à réaliser un montage amovible de la poutraison sur ladite tour.

Une telle poutraison permet de réaliser la suspension des éléments d'échange thermique, par l'intermédiaire des moyens de liaison, rendant ainsi possible un assemblage du corps d'échange à l'extérieur de la tour de refroidissement et un positionnement des éléments d'échange thermique par rapport à la tour de refroidissement, lors de l'installation du corps d'échange à l'intérieur de la tour.

Contrairement aux corps d'échange thermique classiquement utilisés, les éléments d'échange thermique sont montés par rapport à la poutraison de suspension amovible et non par rapport aux parois latérales de l'enveloppe de la tour ou par rapport à la structure même de la tour. Il devient ainsi possible, après avoir assemblé les différents éléments d'échange thermique hors de la tour, de positionner le corps d'échange thermique à l'intérieur de la tour en amenant la poutraison de suspension contre son extrémité supérieure, par exemple à l'aide d'un moyen de levage tel qu'une grue, sans qu'il soit nécessaire pour les opérateurs de pénétrer à l'intérieur de la tour.

En outre, dans le cas d'une opération de maintenance ou d'une opération de nettoyage, on peut retirer de manière analogue le corps d'échange hors de la tour, puis l'amener au niveau du sol pour faciliter les opérations de nettoyage et d'entretien, par exemple pour la prévention de la légionellose.

Dans un mode de réalisation, les moyens de liaison relient entre eux les éléments d'échange thermique et sont aptes à permettre le déplacement d'un élément d'échange thermique entre une position extrême rapprochée et une position extrême éloignée relativement à un élément d'échange thermique adjacent.

L'utilisation de tels moyens de liaison permet d'accroître la sécurité des opérateurs lors de l'assemblage du corps d'échange au niveau du sol ou lors des opérations de nettoyage et d'entretien, en réduisant la hauteur dudit corps à une hauteur d'homme.

En effet, le corps d'échange thermique peut être assemblé ou nettoyé hors de la tour dans une position dite « repliée », dans laquelle les moyens de liaison sont sensiblement horizontaux. Dans cette position, la hauteur du corps d'échange thermique correspond sensiblement à la somme des hauteurs élémentaires des éléments d'échange thermique. Le corps d'échange peut ensuite être monté à l'intérieur de la tour de refroidissement dans une position dite « déployée », dans laquelle les moyens de liaison sont sensiblement verticaux.

Dans un mode de réalisation, les moyens de liaison sont articulés sur les éléments d'échange thermique et la poutraison de support. Les moyens de liaison sont ainsi articulés par une première extrémité sur un élément d'échange thermique, et articulé par une seconde extrémité sur un élément d'échange thermique adjacent.

De préférence, un élément d'échange thermique est relié à un élément d'échange thermique immédiatement supérieur et à un élément d'échange thermique immédiatement inférieur.

Avantageusement, les éléments d'échanges thermiques comprennent au moins un axe d'articulation sur lequel sont montées les extrémités inférieure et supérieure de deux moyens de liaison adjacents.

Dans un autre mode de réalisation, la poutraison de support est réalisée en matière rigide, les moyens de liaison étant réalisés en matière souple, et fixés sur les éléments d'échange thermique et la poutraison de support.

En d'autres termes, l'utilisation de moyens de liaison articulés par une première extrémité sur un élément d'échange thermique, et articulé par une seconde extrémité sur un élément d'échange thermique adjacent, et/ou réalisés en matériau souple, combinée avec l'utilisation d'une poutraison de suspension amovible, réduit sensiblement les risques de chute lors des opérations de montage, ou lors d'opérations de nettoyage de l'échangeur thermique.

Dans un autre mode de réalisation, le corps d'échange thermique comprend un support intermédiaire inférieur des éléments d'échange thermique.

L'invention concerne également une tour de refroidissement comprenant une enveloppe et un corps d'échange thermique pourvu d'une pluralité d'éléments d'échange thermique formant surfaces d'échange, d'une poutraison de suspension, de moyens de liaison reliant les éléments d'échange thermique et la poutraison de suspension. La poutraison est pourvue d'une surface d'appui en contact contre une surface complémentaire de la tour de manière à réaliser un montage amovible de la poutraison sur ladite tour.

L'invention concerne enfin un procédé d'assemblage d'un corps d'échange thermique adapté à une tour de refroidissement comprenant les étapes au cours desquelles :
- on empile une pluralité d'éléments d'échange thermique formant surfaces d'échange en dehors de la tour de refroidissement,
- on relie les éléments d'échange thermique à une poutraison de suspension,
- on soulève la poutraison de suspension, et
- on positionne le corps d'échange thermique à l'intérieur de la tour de refroidissement.

Avantageusement, on relie les éléments d'échange thermique supérieurs à la poutraison de suspension, et on relie, en outre, les éléments d'échange thermique entre eux.

Dans un mode de mise en oeuvre du procédé, on relie les éléments d'échange thermique de manière à permettre, lors du soulèvement de la poutraison de suspension, le déplacement d'un élément d'échange thermique entre une position extrême rapprochée et une position extrême éloignée relativement à un élément d'échange thermique adjacent.

L'invention sera mieux comprise à l'étude de la description détaillée d'un mode de réalisation décrit à titre d'exemple nullement limitatif, et illustré par les dessins annexés sur lesquels :
- la figure 1 montre schématiquement une tour de refroidissement comprenant un corps d'échange thermique selon un premier mode de réalisation de l'invention,
- la figure 2 est une vue en coupe selon l'axe II-II de la figure 1,
- la figure 3 montre schématiquement le corps d'échange thermique de la figure 1 dans une position repliée, et
- la figure 4 montre schématiquement une tour de refroidissement comprenant un corps d'échange thermique selon un second mode de réalisation de l'invention.

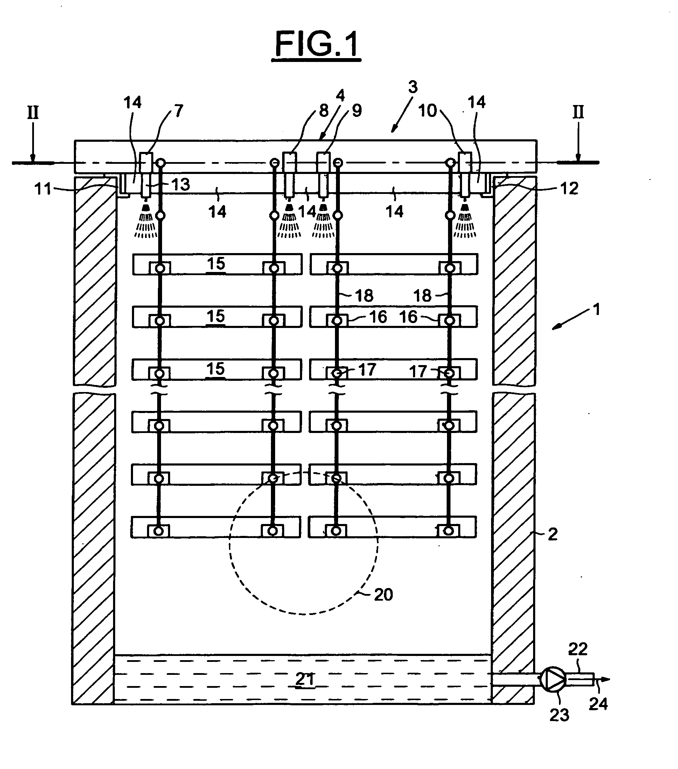

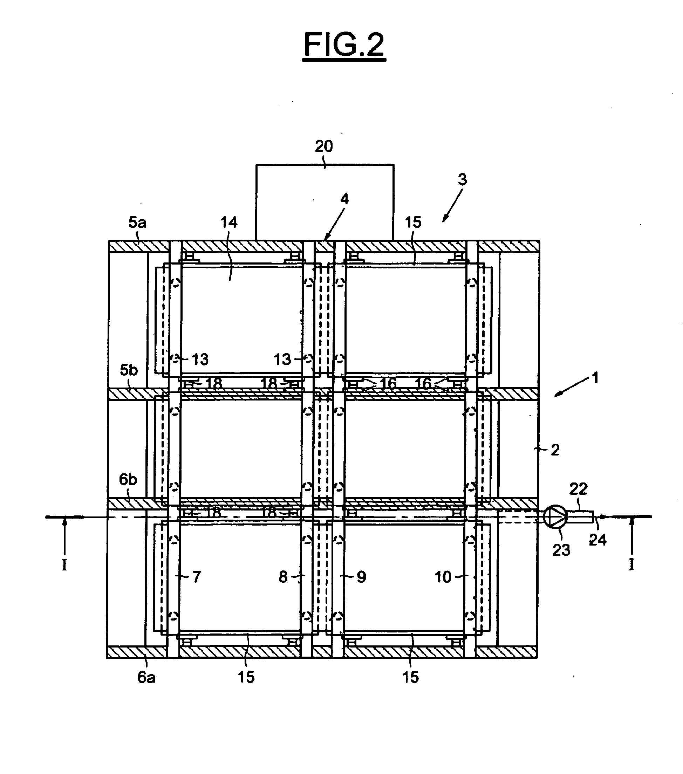

Comme on peut le voir sur les figures 1 et 2, la tour de refroidissement, référencée 1 dans son ensemble, comprend une enveloppe 2 à parois verticales à l'intérieur de laquelle est monté un corps d'échange 3 thermique.

Le corps d'échange 3 thermique comprend une poutraison 4 de suspension supérieure pourvue de quatre poutres 5a, 5b et 6a, 6b montées en appui de façon espacée aux extrémités supérieures des parois de l'enveloppe 2, et des canaux ou tubes de distribution d'eau, référencés 7 à 10, fixés transversalement par rapport aux poutres de support 5a, 5b et 6a, 6b.

Les poutres 5a, 5b et 6a, 6b sont en appui contre l'enveloppe 2, par l'intermédiaire d'organes d'étanchéité 11, 12. Les organes d'étanchéité 11 et 12, avantageusement réalisés en matière synthétique souple ou en matière métallique et présentant ici une forme en Z, sont montés sur la surface inférieure des poutres 5a, 5b et 6a, 6b et viennent en contact avec l'extrémité supérieure et la paroi intérieure de l'enveloppe 2. Ladite surface inférieure forme une surface de contact de la poutraison 4 de suspension avec l'extrémité supérieure de la tour, l'épaisseur des organes d'étanchéité 11, 12 étant relativement faible. Les organes d'étanchéité 11 et 12 permettent d'éviter une éventuelle sortie de fluide à l'extérieur de l'enveloppe 2 de la tour de refroidissement 1.

En d'autres termes, la poutraison 4 de suspension est située à l'extérieur de l'enveloppe 2 et vient en appui contre une portion supérieure de ladite enveloppe. La surface d'appui de la poutraison 4 avec la tour 1 est ici une surface inférieure de ladite poutraison. En variante, il est également envisageable de prévoir une poutraison pourvue d'une surface latérale d'appui présentant une forme générale tronconique.

Chaque canal de distribution 7 à 10 comprend, au niveau d'une face inférieure, un système de dispersion d'eau, par exemple des disperseurs 13, ici au nombre de six et répartis le long des canaux de distribution.

La tour de refroidissement 1 comprend également des panneaux séparateurs 14 de gouttes, de conception connue. Les panneaux séparateurs 14 sont fixés sur les faces inférieures des canaux de distribution 7 à 10 en étant montés soit entre deux canaux de distribution successifs, soit entre un canal de distribution et un organe d'étanchéité 11 ou 12 en contact avec la paroi verticale de l'enveloppe 2.

Le corps d'échange 3 thermique comprend également une pluralité d'éléments d'échange thermique référencés 15. Les éléments d'échange thermique 15 forment des rangées verticales, ici au nombre de six, chaque rangée comprenant ici six éléments horizontaux sensiblement alignés entre eux.

Les éléments d'échange thermique 15 forment des surfaces d'échange refroidissant l'eau pulvérisée par les disperseurs 13. Les corps d'échange, par exemple de type « film », se présentent de préférence sous forme de blocs en matière synthétique thermoformée dits « packing ». Sur chaque élément d'échange thermique 15 sont fixés, au niveau d'une face latérale, des supports 16, ici au nombre de quatre. Les supports 16 sont disposés par paire sur deux faces latérales opposées des éléments d'échange thermique 15 et comprennent chacun un axe d'articulation 17 sensiblement horizontal.

Le corps d'échange 3 comprend également des moyens de liaison 18 reliant entre eux les éléments d'échange thermique 15 d'une même rangée. Un moyen de liaison 18 est articulé par une première extrémité sur le support 16 d'un élément d'échange thermique 15 autour de l'axe d'articulation 17, et articulé par une seconde extrémité autour de l'axe d'articulation 17 du support 16 d'un élément d'échange thermique 15 adjacent, ledit moyen de liaison 18 formant bielle étant dans une position sensiblement verticale.

Un élément d'échange thermique 15 est relié à un élément d'échange thermique 15 immédiatement supérieur, et à un élément d'échange thermique 15 immédiatement inférieur. Autour de chaque axe d'articulation 17 d'un élément d'échange thermique 15 sont montées les extrémités inférieure et supérieure de deux moyens de liaison 18 adjacents. On entend ici par « moyen de liaison adjacent », le moyen de liaison d'une même rangée verticale d'éléments d'échange thermique 15 qui est décalé verticalement vers le haut ou vers le bas.

Les éléments d'échanges thermiques 15 supérieurs sont disposés à proximité des disperseurs 13. Les supports 16 des éléments d'échanges thermiques 15 supérieurs sont ici reliés aux poutres 5a, 5b et 6a, 6b par deux moyens de liaison 18 successifs. En d'autres termes, les extrémités supérieures des moyens de liaison 18 articulés sur les éléments d'échanges thermiques 15 supérieurs sont articulés au niveau d'axes 17 horizontaux autour desquels sont également articulés les extrémités inférieures des moyens de liaison 18 reliées aux poutres 5a, 5b et 6a, 6b. Bien entendu, il est également envisageable d'assujettir directement, aux poutres 5a, 5b et 6a, 6b, les extrémités supérieures des moyens de liaison 18 articulés sur les éléments d'échanges thermiques 15 supérieurs. Les moyens de liaison 18 peuvent avantageusement être réalisés en matière métallique, par exemple en acier, ou en matière synthétique et se présenter sous la forme de fils de diamètre compris entre 2 et 3 mm.

A chaque extrémité des axes d'articulation 17 sont montées des goupilles (non représentées) coopérant avec lesdits axes 17 afin d'éviter une désolidarisation des moyens de liaison 18 et des axes 17. Les goupilles sont fixées sur les axes 17 de manière à laisser subsister un léger jeu entre lesdites goupilles et les moyens de liaison 18 pour permettre le déplacement angulaire des moyens de liaison 18 par rapport aux éléments d'échanges thermiques 15.

La tour de refroidissement comprend également un groupe moto-ventilateur 20 fixé latéralement à l'extérieur de l'enveloppe 2 et un bassin 21 dans lequel est récupérée l'eau projetée par les disperseurs 13 et s'écoulant sous forme de film et/ou sous forme de gouttes sur les éléments d'échange thermique 15. Une conduite 22, traversant une paroi de l'enveloppe 2, est pourvue d'une pompe de circulation 23 pour permettre une circulation, illustrée schématiquement par la flèche 24, de l'eau ainsi refroidie et récupérée en direction d'installations de climatisation ou de procédés industriels à refroidir.

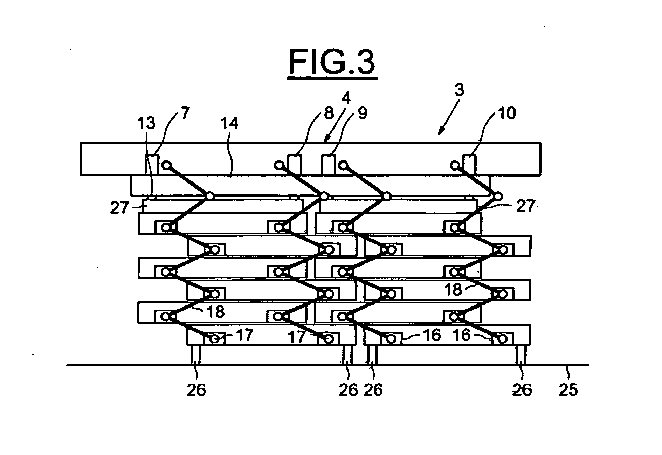

Comme illustré plus visiblement sur la figure 3, le corps d'échange 3, lors de son montage, est dans une position dite « repliée » dans laquelle un élément d'échange thermique 15 se trouve dans une position extrême rapprochée relativement à un élément d'échange thermique 15 adjacent. Dans cette position extrême rapprochée, la surface inférieure d'un élément d'échange thermique 15 est sensiblement en contact avec la surface supérieure de l'élément d'échange thermique 15 immédiatement inférieur.

Lors de l'assemblage du corps d'échange 3, on dispose dans un premier temps, au niveau du sol 25, des premières poutres 26, ici en nombre de quatre, par exemple en bois. Les poutres 26 servent de support pour le premier étage d'éléments d'échange thermique 15. Après avoir réalisé l'empilement des éléments d'échange thermique 15, on dispose, sur les éléments d'échange thermique 15 supérieurs, de secondes poutres 27, puis la poutraison supérieure 4 contre les poutres 27 pour éviter un éventuel contact entre la distribution d'eau et les éléments d'échange thermique 15. On relie ensuite les éléments d'échange thermique 15 entre eux par les moyens de liaison 18, et on articule les élément d'échanges thermiques supérieurs 15 à la poutraison 4. Le montage du corps d'échange 3 s'effectue ainsi sur une hauteur relativement faible, une hauteur d'homme, correspondant sensiblement à la somme des hauteurs des éléments d'échange thermique 15.

Pour amener le corps d'échange 3 à l'intérieur d'une tour de refroidissement 1 (figures 1 et 2), il est par exemple envisageable de prévoir, au niveau de la poutraison 4, des crochets (non représentés) et de réaliser le levage dudit corps d'échange 3 à l'aide d'une grue. Un tel soulèvement provoque, par gravité, le déplacement des moyens d'articulation 18 dans une position sensiblement verticale permettant le passage d'un élément d'échange thermique entre une position extrême rapprochée et une position extrême éloignée relativement à un autre élément d'échange thermique adjacent. Le corps d'échange 3 est ensuite positionné par l'intermédiaire de la poutraison 4 sur la tour de refroidissement.

Bien entendu, il est également envisageable de prévoir des moyens de liaison 18 fixés sur les éléments d'échange thermique 15 et sur la poutraison de suspension. Dans cette variante de réalisation, les moyens de liaison 18 sont réalisés en matière souple pour permettre le déplacement d'un élément d'échange thermique entre une position extrême rapprochée et une position extrême éloignée relativement à un élément d'échange thermique adjacent lors du soulèvement de la poutraison de suspension. Les moyens de liaison 18 peuvent ainsi être réalisés sous forme de fils, réalisés en matière synthétique souple, ou encore en acier du type "corde à piano".

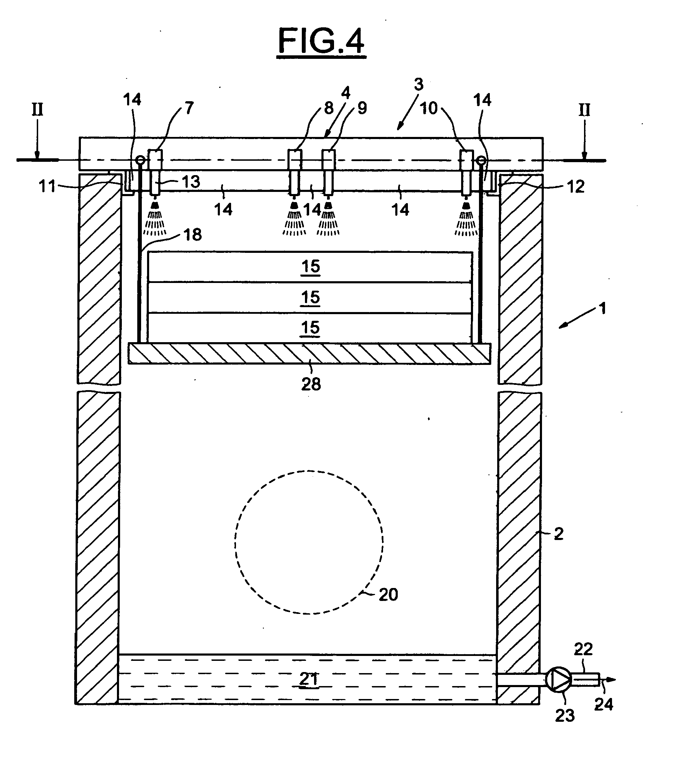

Le mode de réalisation illustré à la figure 4 diffère en ce que le corps d'échange 3 thermique comprend un support intermédiaire 28 sur lesquels sont alignés verticalement les éléments d'échange thermique 15, ici au nombre de trois, et en ce que les moyens de liaison 18 sont articulés au niveau de la poutraison de suspension 4 et dudit support intermédiaire 28. Bien entendu, il est également envisageable de fixer les moyens de liaison 18 sur la poutraison de suspension 4 et le support intermédiaire 28. Les moyens de liaisons peuvent être réalisés en matière souple ou rigide.

Ce mode de réalisation est particulièrement adapté pour un corps d'échange de type film présentant un empilement d'éléments d'échange thermique 15 de hauteur relativement restreinte.

Le corps d'échange peut ainsi être monté de manière particulièrement rapide et économique tout en offrant une sécurité accrue pour les opérateurs. En outre, pour des opérations de maintenance et de nettoyage, le corps d'échange thermique formant un ensemble unitaire peut aisément être retiré de la tour de refroidissement avant d'être démonté.

Grâce à l'invention, on obtient un corps d'échange thermique pourvu d'une pluralité d'éléments d'échange thermique formant surfaces d'échange, d'une poutraison de suspension, de moyens de liaison reliant les éléments d'échange thermique et la poutraison de suspension, dans lequel ladite poutraison comprend une surface d'appui destinée à venir en appui contre une surface complémentaire de la tour de manière à permettre le positionnement relatif du corps d'échange et de parois de la tour ainsi que le support dudit corps sans qu'il soit nécessaire de prévoir des éléments de fixation additionnels.

## Revendications

1. Corps d'échange thermique pour tour de refroidissement comprenant une pluralité d'éléments d'échange thermique (15) formant surfaces d'échange, une poutraison (4) de suspension, des moyens de liaison (18) reliant les éléments d'échange thermique et la poutraison de suspension, **caractérisé en ce que** ladite poutraison est pourvue d'une surface d'appui destinée à venir en contact contre une surface complémentaire de la tour de manière à réaliser un montage amovible de la poutraison sur ladite tour.

2. Corps selon la revendication 1, **caractérisé en ce que** les moyens de liaison relient entre eux les éléments d'échange thermique et sont aptes à permettre le déplacement d'un élément d'échange thermique entre une position extrême rapprochée et une position extrême éloignée relativement à un élément d'échange thermique adjacent.

3. Corps selon la revendication 1 ou 2, **caractérisé en ce que** les moyens de liaison sont articulés sur les éléments d'échange thermique et la poutraison de support.

4. Corps selon l'une quelconque des revendications précédentes, **caractérisé en ce qu**'un élément d'échange thermique (15) est relié à un élément d'échange thermique immédiatement supérieur et à un élément d'échange thermique immédiatement inférieur.

5. Corps selon la revendication 4, **caractérisé en ce que** les éléments d'échange thermique comprennent au moins un axe d'articulation (17) sur lequel sont montées les extrémités inférieure et supérieure de deux moyens de liaison (18) adjacents.

6. Corps selon la revendication 1 ou 2, **caractérisé en ce que** la poutraison de support est réalisée en matière rigide, les moyens de liaison étant réalisés en matière souple, et fixés sur les éléments d'échange thermique et la poutraison de support.

7. Corps selon la revendication 6, **caractérisé en ce qu**'il comprend, en outre, un support intermédiaire (28) des éléments d'échange thermique.

8. Tour de refroidissement comprenant une enveloppe (2) et un corps d'échange thermique conforme à la revendication 1.

9. Procédé d'assemblage d'un corps d'échange thermique adapté à une tour de refroidissement, **caractérisé en ce qu**'il comprend les étapes au cours desquelles :
- on empile une pluralité d'éléments d'échange thermique formant surfaces d'échange en dehors de la tour de refroidissement,
- on relie les éléments d'échange thermique à une poutraison de suspension,
- on soulève la poutraison de suspension, et
- on positionne le corps d'échange thermique à l'intérieur de la tour de refroidissement.

10. Procédé selon la revendication 9, **caractérisé en ce qu**'on relie les éléments d'échange thermique supérieurs à la poutraison de suspension, et on relie, en outre, les éléments d'échange thermique entre eux.

11. Procédé selon la revendication 10, **caractérisé en ce qu**'on relie les éléments d'échange thermique de manière à permettre, lors du soulèvement de la poutraison de suspension, le déplacement d'un élément d'échange thermique entre une position extrême rapprochée et une position extrême éloignée relativement à un élément d'échange thermique adjacent.

## Claims

1. Heat exchange body for a cooling tower, comprising a plurality of heat exchange elements (15) forming exchange surfaces, a suspension beam assembly (4), and linking means (18) connecting the heat exchange elements and the suspension beam assembly, **characterized in that** the said beam assembly is provided with a bearing surface intended to come into contact with a complementary surface of the tower so as to provide a removable mounting of the beam assembly on the said tower.

2. Body according to Claim 1, **characterized in that** the linking means connect the heat exchange elements to one another and are designed to allow the movement of a heat exchange element between a proximate end position and a remote end position relative to an adjacent heat exchange element.

3. Body according to Claim 1 or 2, **characterized in that** the linking means are pivoted on the heat exchange elements and the support beam assembly.

4. Body according to any one of the preceding claims, **characterized in that** a heat exchange element (15) is connected to an immediately upper heat exchange element and to an immediately lower heat exchange element.

5. Body according to Claim 4, **characterized in that** the heat exchange elements comprise at least one pivot pin (17) on which the lower and upper ends of two adjacent linking means (18) are mounted.

6. Body according to Claim 1 or 2, **characterized in that** the support beam assembly is made of rigid material, the linking means being made of flexible material and fastened to the heat exchange elements and the support beam assembly.

7. Body according to Claim 6, **characterized in that** it additionally comprises an intermediate support (28) for the heat exchange elements.

8. Cooling tower comprising a shell (2) and a heat exchange body according to Claim 1.

9. Method of assembling a heat exchange body adapted to a cooling tower, **characterized in that** it comprises the steps during which:
- a plurality of heat exchange elements forming exchange surfaces are stacked outside of the cooling tower,
- the heat exchange elements are connected to a suspension beam assembly,
- the suspension beam assembly is raised, and
- the heat exchange body is positioned inside the cooling tower.

10. Method according to Claim 9, **characterized in that** the upper heat exchange elements are connected to the suspension beam assembly, and the heat exchange elements are additionally connected to one another.

11. Method according to Claim 10, **characterized in that** the heat exchange elements are connected in such a way that, while the suspension beam assembly is being raised, they allow a heat exchange element to move between a proximate end position and a remote end position relative to an adjacent heat exchange element.

## Patentansprüche

1. Wärmeaustauschkörper für einen Kühlturm, der eine Vielzahl von Wärmeaustauschelementen (15), die Austauschflächen bilden, ein Aufhängebalkenwerk (4), Verbindungsmittel (18), die die Wärmeaustauschelemente und das Aufhängebalkenwerk verbinden, umfasst, **dadurch gekennzeichnet, dass** das Balkenwerk mit einer Stützfläche versehen ist, die dazu bestimmt ist, gegen eine komplementäre Oberfläche des Turms in Kontakt zu treten, um einen beweglichen Zusammenbau des Balkenwerks an dem Turm durchzuführen.

2. Körper nach Patentanspruch 1, **dadurch gekennzeichnet, dass** die Verbindungsmittel untereinander die Wärmeaustauschelemente verknüpfen und in der Lage sind, die Bewegung eines Wärmeaustauschelements zwischen einer extrem nahen Position und einer extrem entfernten Position in Bezug auf ein angrenzendes Wärmeaustauschelement zu ermöglichen.

3. Körper nach Patentanspruch 1 oder 2, **dadurch gekennzeichnet, dass** die Verbindungsmittel an den Wärmeaustauschelementen und dem Trägerbalkenwerk angelenkt sind.

4. Körper nach einem der vorangehenden Patentansprüche, **dadurch gekennzeichnet, dass** ein Wärmeaustauschelement (15) an ein Wärmeaustauschelement unmittelbar darüber und an ein Wärmeaustauschelement unmittelbar darunter angelenkt ist.

5. Körper nach Patentanspruch 4, **dadurch gekennzeichnet, dass** die Wärmeaustauschelemente mindestens eine Gelenkachse (17) umfassen, an der die unteren und oberen Enden von zwei angrenzenden Verbindungsmitteln (18) montiert sind.

6. Körper nach Patentanspruch 1 oder 2, **dadurch gekennzeichnet, dass** das Trägerbalkenwerk aus einem steifen Material ausgeführt ist, während die Verbindungsmittel aus einem biegsamen Material ausgeführt sind und an den Wärmeaustauschelementen und dem Trägerbalkenwerk befestigt sind.

7. Körper nach Patentanspruch 6, **dadurch gekennzeichnet, dass** er außerdem einen Zwischenträger (28) der Wärmeaustauschelemente umfasst.

8. Kühlturm, der eine Hülle (2) und einen Wärmeaustauschkörper nach Patentanspruch 1 umfasst.

9. Verfahren zum Zusammenbauen eines Wärmeaustauschkörpers, der an einen Kühlturm angepasst ist, **dadurch gekennzeichnet, dass** es folgende Schritte umfasst, bei denen:
- eine Vielzahl von Wärmeaustauschelementen , die Austauschflächen bilden, außerhalb des Kühlturms aufgestapelt werden,
- die Wärmeaustauschelemente mit einem Aufhängebalkenwerk verbunden werden,
- das Aufhängebalkenwerk angehoben wird, und
- der Wärmeaustauschkörper im Innern des Kühlturms positioniert wird.

10. Verfahren nach Patentanspruch 9, **dadurch gekennzeichnet, dass** die oberen Wärmeaustauschelemente mit dem Aufhängebalkenwerk verbunden und außerdem die Wärmeaustauschelemente miteinander verbunden werden.

11. Verfahren nach Patentanspruch 10, **dadurch gekennzeichnet, dass** die Wärmeaustauschelemente so verbunden werden, dass beim Anheben des Aufhängebalkenwerks die Bewegung eines Wärmeaustauschelements zwischen einer extrem nahen Position und einer extrem entfernten Position in Bezug auf ein benachbartes Wärmeaustauschelement ermöglicht wird.
